**Europäisches Patentamt**

**European Patent Office**

**Office européen des brevets**

(19)

(11) Veröffentlichungsnummer: **0 353 490**
**A2**

(12)

# EUROPÄISCHE PATENTANMELDUNG

(21) Anmeldenummer: **89112450.5**

(22) Anmeldetag: **07.07.89**

(51) Int. Cl.⁴: **B29C 51/22 , B29C 51/04**

Die Bezeichnung der Erfindung wurde geändert
(Richtlinien für die Prüfung im EPA, A-III, 7.3).

(30) Priorität: **13.07.88 DE 3823690**

(43) Veröffentlichungstag der Anmeldung:
**07.02.90 Patentblatt 90/06**

(84) Benannte Vertragsstaaten:
**BE DE ES FR GB IT**

(71) Anmelder: **Grammer Sitzsysteme GmbH**
**Postfach 14 54**
**D-8450 Amberg(DE)**

(72) Erfinder: **Übelacker, Horst**

**D-8451 Hohenburg 212(DE)**
Erfinder: **Storch, Helmut**
**Am Südhang 5**
**D-8450 Amberg(DE)**
Erfinder: **Buchwald, Peter**
**Steigerstrasse 3a**
**D-8458 Sulzbach-Rosenberg(DE)**

(74) Vertreter: **LOUIS, PÖHLAU, LOHRENTZ &
SEGETH**
**Kesslerplatz 1 Postfach 3055**
**D-8500 Nürnberg-1(DE)**

(54) Drehbare Anlage zum Vorstrecken und Tiefziehen.

(57) Bei einer Anlage zum Tiefziehen und Hinterschäumen von Polsterbezügen sind die Tiefziehformen 12a, 12b auf einem Rundtisch angeordnet. Dabei ist neben dem Rundtisch 10 für die Tiefziehformen 12a, 12b eine stationäre Streckstempelstation
20 vorgesehen, die alle an der Streckstempelstation
vorbeigeführten Tiefziehformen 12a, 12b auf dem
Rundtisch 10 bedient.

EP 0 353 490 A2

Die Erfindung betrifft eine Anlage zum Tiefziehen und Hinterschäumen von Polsterbezügen mit einer Vielzahl von auf einem drehbaren Rundtisch angeordneten Tiefziehformen, wobei mindestens ein Streckstempel vorgesehen ist, der die auf die Formen aufgespannten Bezüge in die Formen hineindrückt.

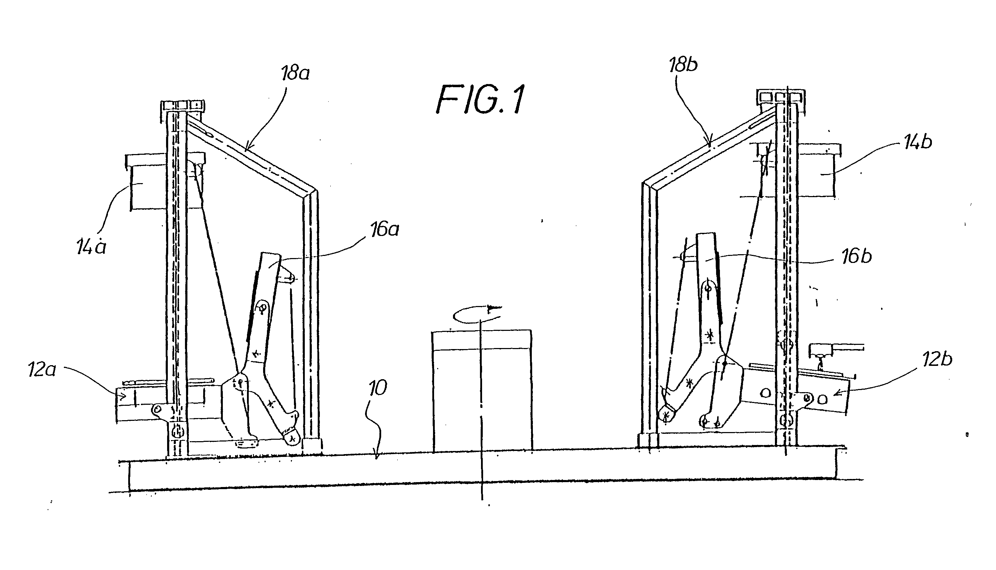

Nach dem Stand der Technik ist jeder Tiefziehformträger mit einem eigenen Streckstempelträger ausgerüstet, dessen Streckstempel den auf die Tiefziehform aufgespannten Bezug in die Tiefziehform vor dem Hinterschäumvorgang. Mit anderen Worten ist die Anzahl der Streckstempel der Anlage gleich der Anzahl der Tiefziehformen auf dem Rundtisch. Dieser Stand der Technik ist in der beiliegenden Figur 1 veranschaulicht, in der der drehbare Rundtisch das Bezugszeichen 10 trägt, auf dem Tiefziehformen 12a und 12b angeordnet sind. Jede Tiefziehform 12a, 12b ist mit einem eigenen Streckstempel 14a, 14b versehen, mit dem ein auf die Tiefziehform 12a, 12b aufgespannter Bezug in die Tiefziehform vor dem Hinterschäumvorgang gedrückt wird. Mit den Bezugszeichen 16a und 16b sind Formenoberteile bezeichnet, mit denen die Tiefziehformen 12a und 12b vor dem Hinterschäumvorgang geschlossen werden, der an einer speziellen neben dem Rundtisch 10 stationär angeordneten Arbeitsstation ausgeführt wird, an die die einzelnen Arbeitsstationen 12a und 12b taktweise vorbeigeführt werden. Mit 18a und 18b sind Träger für die Streckstempel 14a und 14b bezeichnet.

Sind beispielsweise 14 Tiefziehformen 12a ... vorgesehen, so müssen nach dem stand der Technik auch 14 Streckstempel 14a ... vorgesehen sein.

Mit der Erfindung soll nun eine neue Konzeption für eine derartige Anlage aufgezeigt werden, die es ermöglicht, mit weniger Streckstempeln auszukommen, als Tiefziehformen vorhanden sind, wenn einige Tiefziehformen auf dem Rundtisch gleich sein sollten.

Diese Aufgabe wird ausgehend von einer Anlage der eingangs genannten Art erfindungsgemäß dadurch gelöst, daß neben dem Rundtisch für die Tiefziehformen eine stationäre Streckstempelstation vorgesehen ist, die alle an der Streckstempelstation vorbeigeführten Tiefziehformen auf dem Rundtisch bedient.

Jetzt kann ein und derselbe Streckstempel zwei oder mehrere Tiefziehformen bedienen, wenn diese vom gleichen Typ sind, d.h. wenn der Streckstempel für all diese Formen benutzt werden kann, insbesondere also, wenn diese Formen sich in der Größe und in der Gestaltung gleichen.

Damit läßt sich die Anzahl der Streckstempel und der zugehörigen Hubeinrichtungen vermindern und wird außerdem erreicht, daß die auf dem Rundtisch zu bewegende Masse kleiner wird, was die an sich bekannten Vorteile wie geringere Beschleunigungs- und Bremskräfte an Takten des Rundtisches mit sich bringt.

Zweckmäßigerweise weist die Streckstempelstation soviele unterschiedliche Streckstempel auf, wie sich unterschiedliche Formen auf dem Rundtisch befinden.

Dabei sind vorteilhafterweise die Streckstempel an einem drehbaren Stern angeordnet.

In einer bevorzugten Ausbildung ist der Stern insgesamt heb-und senkbar, so daß für alle Streckstempel nur eine einzige Hubeinrichtung vorgesehen ist.

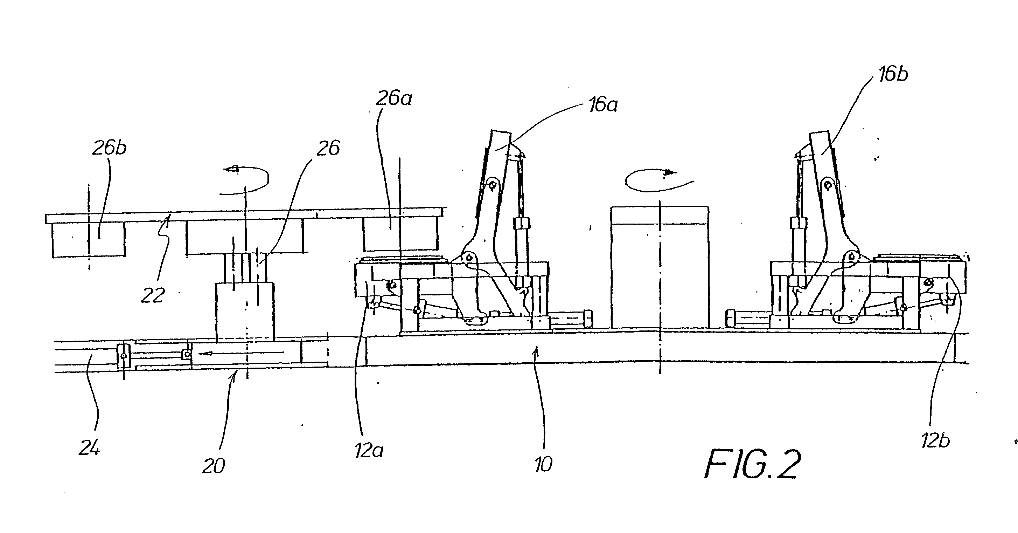

In der beiliegenden Figur 2 ist die Erfindung näher veranschaulicht. Diese Figur zeigt schematisch eine Seitenansicht der Erfindung. Auf dem Rundtisch 10 sind wie vorhin Tiefziehformen 12a und 12b mit ihren schlichtbaren Formoberteilen 16a und 16b angeordnet. Diese Tiefziehformen werden an einer stationären Streckstempelstation 20 taktweise vorbeigeführt. Die Streckstempelstation 20 weist einen Stern 22 auf, der mittels einer Kolben- Zylindereinheit 24 wie gezeigt horizontal verfahrbar ist, so daß Streckstempel 26a, 26b an den Enden der Arme des drehbaren Sterns 22 in Arbeitsteilung über eine an die Streckstempelstation gebrachte Tiefziehform gebracht und aus dieser Arbeitsstellung entfernt werden kann. Auf diese Weise wird erreicht, daß nach dem Streckvorgang das zugehörige Formoberteil die Tiefziehform schließen kann, ohne daß die Tiefziehform von der Streckstempelstation weggefahren werden muß. Mit dem Bezugszeichen 26 ist eine Hubeinrichtung für den Stern 22 bezeichnet, mit der alle Streckstempel 26a, 26b angehoben bzw. abgesenkt werden können, insbesondere also auch der sich gerade in Arbeitsstellung über eine Tiefziehform befindende Streckstempel.

**Ansprüche**

1. Anlage zum Tiefziehen und Hinterschäumen von Polsterbezügen mit einer Vielzahl von auf einem drehbaren Rundtisch (10) angeordneten Tiefziehformen (12a, 12b) wobei mindestens ein Streckstempel (26a 26b) vorgesehen ist, der die auf die Formen (12a 12b) aufgespannten Bezüge in die Formen hineindrückt,
**dadurch gekennzeichnet,**
daß neben dem Rundtisch (10) für die Tiefziehformen (12a, 12b) eine stationäre Streckstempelstation (20) vorgesehen ist, die alle an der Streckstempelstation (20) vorbeigeführten Tiefziehformen (12a, 12b) auf dem Rundtisch (10) bedient.

2. Anlage nach Anspruch 1,
**dadurch gekennzeichnet,**
daß die Streckstempelstation (20) soviele unterschiedliche Streckstempel (26a, 26b) aufweist, wie sich unterschiedliche Formen (12a, 12b) auf dem Rundtisch (10) befinden.

3. Anlage nach Anspruch 2m,
**dadurch gekennzeichnet,**
daß die Streckstempel an den Enden der Arme eines Sterns (22) angeordnet sind.

4. Anlage nach Anspruch 3,
**dadurch gekennzeichnet,**
daß eine einzige Hubeinrichtung (26) für den Stern (22) vorgesehen ist.

FIG.1

EP 0 353 490 A2

FIG.2

EP 0 353 490 A2